(19) Europäisches Patentamt
European Patent Office
Office européen des brevets

(11) EP 4 279 545 B1

(12) **EUROPEAN PATENT SPECIFICATION**

(45) Date of publication and mention of the grant of the patent:
**16.09.2026 Bulletin 2026/38**

(21) Application number: **22752833.8**

(22) Date of filing: **10.02.2022**

(51) International Patent Classification (IPC):
***C08L 67/04*** *(2006.01)* ***C08L 23/06*** *(2006.01)*
***C08L 23/12*** *(2006.01)*

(52) Cooperative Patent Classification (CPC):
(C-Sets available)
**C08L 23/12; C08L 23/06;** C08L 67/04 (Cont.)

(86) International application number:
**PCT/JP2022/005457**

(87) International publication number:
**WO 2022/173011 (18.08.2022 Gazette 2022/33)**

(54) **COMPOSITION**

ZUSAMMENSETZUNG

COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2021 JP 2021021543**

(43) Date of publication of application:
**22.11.2023 Bulletin 2023/47**

(73) Proprietors:
- **Sumitomo Chemical Company, Limited**
  **Chuo-ku**
  **Tokyo 103-6020 (JP)**
- **Newlight Technologies, Inc.**
  **Huntington Beach CA 92647 (US)**

(72) Inventor: **CHIBA, Shunsuke**
**Ichihara-shi, Chiba 299-0195 (JP)**

(74) Representative: **Vossius & Partner**
**Patentanwälte Rechtsanwälte mbB**
**Siebertstraße 3**
**81675 München (DE)**

(56) References cited:
**WO-A1-2009/087971** **WO-A1-2009/133516**
**JP-A- 2006 077 063** **JP-A- 2008 222 865**
**JP-A- 2008 239 858** **JP-A- 2016 186 025**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/06, C08L 67/04;**
**C08L 23/12, C08L 67/04**

## Description

### Technical Field

The present invention relates to compositions.

### Background Art

Among thermoplastic resins, olefin-based polymers are inexpensive, lightweight, and excellent in such properties as formability, mechanical properties, heat resistance properties, heat resistance, and long-term heat resistance deterioration. For this reason, olefin-based polymers are used in various containers such as bottles, food packaging materials, container caps, stationery, daily goods, fibers for carpets and sofas, interior and exterior materials for automobiles, electrical and electronic components, and building materials such as interior materials for buildings and houses. In recent years, improvements in airtightness, painting properties, dyeability and the like are often required for these articles.

Therefore, as a means for responding to these requirements, as described in Patent Document 1, there is considered a method in which a thermoplastic polyester, typified by polyethylene terephthalate and polybutylene terephthalate, which is superior to an olefin-based polymer in air-tightness, painting properties and dyeability, is blended into the olefin-based polymer.

Patent Literature 2 discloses a resin composition characterized by containing talc whose particle surface has been rendered hydrophobic by treatment with a titanate coupling agent and a fatty acid metal salt, a plant-derived polyester containing polylactic acid, polyhydroxybutyrate, or poly(hydroxybutyrate-hydroxyhexanoate), and polypropylene.

Patent Literature 3 provides a composition comprising 100 parts by weight of a polyolefin, 1 to 100 parts by weight of an aliphatic polyester-based biodegradable polymer, and 0.1 to 100 parts by weight of an acid-or epoxy-functional polyolefin, wherein the polyolefin forms a matrix, the aliphatic polyester-based biodegradable polymer forms domains, and the acid- or epoxy-functional polyolefin surrounds the domains, forming a dispersion structure.

Patent Literature 4 is concerned with a thermoplastic composition, comprising: 10 to 80% by weight of a polyhydroxyalkanoate polyester; 10 to 80% by weight of a conventional polymer having a melting temperature of 220 °C or less; 0.5 to 10% by weight of a compatibilizer; and from 0.2 to 10% by weight of a pro-degradation additive.

### Citation List

### Patent Literature

Patent Literature 1: Japanese Unexamined Patent Application Publication No. H06-73264
Patent Literature 2: Japanese Unexamined Patent Application No. 2008-239858
Patent Literature 3: Japanese Unexamined Patent Application No. 2006-077063
Patent Literature 4: WO 2009/133516 A1

### Summary of Invention

### Technical Problem

However, the olefin-based polymer and the thermoplastic polyester have poor compatibility. Therefore, even when a melt-kneaded composition containing an olefin-based polymer and a thermoplastic polyester is introduced into a cavity of a mold having a fine structure pattern and then the mold is cooled to solidify the composition, there is a problem that the cavity of the mold and the composition are difficult to adhere to each other due to phase separation between the olefin-based polymer and the thermoplastic polyester, and the transferability of the fine structure pattern to the molded article deteriorates.

The present invention has been made in view of the above problems, and an object thereof is to provide a composition having excellent transferability of a fine structure pattern even when a thermoplastic polyester is blended therein.

### Solution to Problem

One aspect of the invention is a composition comprising an olefin-based polymer A and a polymer B, wherein

the polymer B is a poly(3-hydroxyalkanoate) based polymer having a melting point of 150 °C or higher, and
the content of the polymer A is 90 to 99.9 parts by mass and the content of the polymer B is 0.1 to 10 parts by mass with respect to a total of 100 parts by mass of the polymer A and the polymer B.

Further, the polymer A may be a propylene-based polymer.

**Advantageous Effect of Invention**

According to the present invention, a composition having excellent transferability of a fine structure pattern while containing a thermoplastic polyester as a main component is provided.

**Description of Embodiments**

Hereinafter, several embodiments of the present invention will be described in detail. However, the present invention is not limited to the following embodiments.
A composition according to the present invention comprises an olefin-based polymer A and a polymer B.

<Olefin-based Polymer A>

The olefin-based polymer A is a polymer containing 50% by weight or more of a structural unit derived from an olefin having a carbon atom number of 2 to 10 (the total amount of the olefin-based polymer is 100% by weight). Examples of olefins having a carbon atom number of 2 to 10 are ethylene, propylene, 1-butene, 4-methyl-1-pentene, 1-hexene, 1-octene and 1-decene.
The olefin-based polymer A may contain a structural unit derived from a monomer other than olefin having a carbon atom number of 2 to 10. Examples of monomers other than olefins having 2 to 10 carbon atom are aromatic vinyl monomers such as styrene ; unsaturated carboxylic acids such as acrylic acid and methacrylic acid ; unsaturated carboxylic acid esters such as methyl acrylate, ethyl acrylate, butyl acrylate, methyl methacrylate and ethyl methacrylate ; vinyl ester compounds such as vinyl acetate ; conjugated dienes such as 1, 3-butadiene, 2-methyl-1, 3-butadiene (isoprene) ; and non-conjugated dienes such as dicyclopentadiene, 5-ethylidene-2-norbornene.
The olefin-based polymer A may be at least one selected from the group consisting of an ethylene-based polymer, a propylene-based polymer and a butene-based polymer, and may be a combination of any two or more of these.
The ethylene-based copolymer is a polymer containing 50 mass% or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based copolymer may be a combination of two or more ethylene-based copolymers.
The propylene-based copolymer is a polymer containing 50 mass% or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based copolymer may be a combination of two or more propylene-based copolymers. It is preferable that the olefin-based polymer A is a propylene-based copolymer.
The butene-based copolymer is a polymer containing 50 mass% or more of a structural unit derived from 1-butene, and examples thereof include 1-butene homopolymer, 1-butene-ethylene copolymer, 1-butene-propylene copolymer, 1-butene-1-hexene copolymer, 1-butene-1-octene copolymer, 1-butene-ethylene-propylene copolymer, 1-butene-ethylene-1-hexene copolymer, 1-butene-ethylene-1-octene copolymer, 1-butene-propylene-1-hexene copolymer, and 1-butene-propylene-1-octene copolymer. The butene-based copolymer may be a combination of two or more butene-based copolymers.
The above-mentioned olefin-based polymer A can be produced by using a known polymerization method using a known polymerization catalyst.
The melt mass flow rate (MFR) of the olefin-based polymer A measured according to JIS K7210-2014 under the conditions of a temperature of 230 °C or 190 °C and a load of 2.16 kgf is preferably 0.1g / 10 min or more and 200g / 10 min or less.

<Polymer B>

Polymer B is a poly(3-hydroxyalkanoate)-based polymer having a melting point of 150 °C or higher.
The poly(3-hydroxyalkanoate) based polymer is a polyhydroxyalkanoate, that is, a polyester of a hydroxyalkanoic acid, and always contains a repeating unit of 3 - hydroxyalkanoate represented by formula (1). In formula (1), R is a

hydrogen atom, a halogen atom, an alkyl group having 1 to 15 carbon atoms, a cyano group, an amino group having 1 to 11 carbon atoms, an alkoxy group (an alkyloxy group) having 1 to 11 carbon atoms, an amide group having 2 to 20 carbon atoms, an aryl group having 6 to 12 carbon atoms, or a monovalent heterocyclic group having 1 to 9 carbon atoms. These groups may have a substituent group. Particularly, from the viewpoint of compatibility with components other than the polymer B contained in the composition (for example, the polymer A), R is preferably an alkyl group having 1 to 8 carbon atoms, an amide group having 2 to 20 carbon atoms, or an aryl group having 6 to 8 carbon atoms.

$$[\text{-O-CHR-CH}_2\text{-CO-}] \ldots \qquad (1)$$

Examples of a halogen atom are F, Cl, Br, and I.

Alkyl groups having 1 to 15 carbon atom numbers may be linear or branched. The carbon atom number of the alkyl group is preferably 1 to 8, and more preferably 1 to 4. Examples of alkyl groups are a methyl group, an ethyl group, a propyl group, an isopropyl group, a butyl group, an isobutyl group, a sec-butyl group, a tert-butyl group, a pentyl group, an isopentyl group, a 2-methylbutyl group, a 1-methylbutyl group, a hexyl group, an isohexyl group, a 3-methylpentyl group, a 2-methylpentyl group, a 1-methylpentyl group, a heptyl group, a octyl group, an isooctyl group, a 2-ethylhexyl group, a 3, 7-dimethyloctyl group, a nonyl group, a decyl group, a undecyl group, a dodecyl group, a tetradecyl group and a pentadecyl group.

Examples of amino groups having a carbon atom number of 1 to 11 are amino groups, alkylamino groups, dialkylamino groups, arylamino groups, alkylarylamino groups, benzylamino groups and dibenzylamino groups.

Examples of alkylamino groups are a methylamino group, an ethylamino group, a propylamino group, a butylamino group, a pentylamino group, a hexylamino group, a heptylamino group, an octylamino group, a nonylamino group, a decylamino group, a dodecylamino group, an isopropylamino group, an isobutylamino group, an isopentylamino group, a sec-butylamino group, a tert-butylamino group, a sec-pentylamino group, a tert-pentylamino group, a tert-octylamino group, a neopentylamino group, a cyclopropylamino group, a cyclobutylamino group, a cyclopentylamino group, a cyclohexylamino group, a cycloheptylamino group, a cyclooctylamino group, a 1-adamantamino group and a 2-adamantamino group.

Examples of dialkylamino groups are a dimethylamino group, a diethylamino group, a dipropylamino group, a dibutylamino group, a dipentylamino group, a diisopropylamino group, a diisobutylamino group, a diisopentylamino group, a methylethylamino group, a methylpropylamino group, a methylbutylamino group, a methylisobutylamino group, a dicyclopropylamino group, a pyrrolidino group, a piperidino group, a piperazino group.

Examples of arylamino groups are anilino group, a 1-naphthylamino group, a 2-naphthylamino group, a o-toluidino group, a m-toluidino group, a p-toluidino group, a 1-fluoreneamino group, a 2-fluoreneamino group, a 2-thiazoleamino group and a p-terphenylamino group.

The alkylarylamino group may be an N-methylanilino group, an N-ethylanilino group, an N-propylanilino group, an N-butylanilino group, an N-isopropylanilino group or an N-pentylanilino group.

Examples of alkoxy groups having 1 to 11 carbon atom numbers are a methoxy group, an ethoxy group, a propoxy group, an isopropoxy group, a butoxy group, an isobutoxy group, a sec-butoxy group, a tert-butoxy group, a cyclopropoxy group, a cyclobutoxy group and a cyclopentoxy group.

The "amide group" means a group obtained by removing one hydrogen atom bonded to a nitrogen atom from a carboxylic amide. Examples of the amide group having a carbon atom number of 2 to 20 include a group represented by -NH-C(= O)-$R^A$ such as a formamide group, an acetamide group, a propionamide group, a butyramide group, a benzamide group, a trifluoroacetamide group and a pentafluorobenzamide group (wherein $R^A$ represents a hydrogen atom or a monovalent organic group), and a group represented by -N(-C(=O)-$R^A$)(-C(=O)-$R^B$) such as a diformamide group, a diacetamide group, a dipropionamide group, a dibutylamide group, a dibenzamide group, a ditrifluoroacetamide group and a dipentafluorobenzamide group (wherein $R^A$ and $R^B$ each independently represent a hydrogen atom or a monovalent organic group). The organic group can be an alkyl group, an alkoxy group or an aryl group, optionally substituted with a halogen atom. Among these, the amide group is preferably a formamide group, an acetamide group, a propionamide group, a butyramide group, or a benzamide group.

Examples of the aryl group having 6 to 12 carbon atom numbers are a phenyl group, a tolyl group, a xylyl group, a naphthyl group and a biphenyl group, and among these, a phenyl group, a tolyl group and a xylyl group are more preferable.

Examples of a hetero atom of a monovalent heterocyclic group having a carbon atom number of 1 to 9 are N, O, and S, and may be saturated or unsaturated, and may have a single hetero atom or a plurality of hetero atom, or may have different types of hetero atom. Examples of such heterocyclic groups include a thienyl group, a pyrrolyl group, a furyl group, a pyridyl group, a piperidinyl group, a quinolinyl group, an isoquinolinyl group, a pyrimidinyl group, a triazinyl group, a thiazolyl group.

The repeating unit of the polymer B may consist only of one or more kinds of 3-hydroxyalkanoate represented by formula (1), and may have one or more kinds of 3-hydroxyalkanoate represented by formula (1) and one or more kinds of

other hydroxyalkanoate.

The polymer B preferably contains 50 mol% or more, more preferably 70 mol% or more, of the repeating unit of 3-hydroxylkanoate represented by formula (1) with respect to the total repeating unit (100 mol%) of the hydroxyalkanoate.

Examples of the 3-hydroxyalkanoate represented by formula (1) are: when R is a hydrogen atom or an alkyl group represented by $C_nH_{2n+1}$ and n is an integer from 1 to 15, 3-hydroxybutyrate with n = 1 (hereinafter sometimes referred to as 3HB), 3-hydroxyvalerate with n = 2 (hereinafter sometimes referred to as 3HV), 3-hydroxyhexanoate with n = 3 (hereinafter sometimes referred to as 3HH), 3-hydroxyoctanoate with n = 5, 3-hydroxyoctadecanoate with n = 15, and 3-hydroxypropionate where R is a hydrogen atom.

An example of polymer B having only one repeating unit represented by formula (1) is poly(3-hydroxybutyrate) (hereinafter sometimes referred to as P3HB).

Examples of the polymer B having only a plurality of repeating units represented by formula (1) are poly(3-hydroxybutyrate-co-3-hydroxyhexanoate) (hereinafter referred to as P3HB3HH), poly(3-hydroxybutyrate-co-3-hydroxyvalerate) (hereinafter sometimes referred to as P3HB3HV), and poly(3-hydroxybutyrate-co-3-hydroxypropyonate) (hereinafter sometimes referred to as P3HB3HP).

Examples of other hydroxyalkanoate other than the 3-hydroxyalkanoate represented by formula (1) is a repeating unit represented by formula (2) (wherein $R^1$ is a hydrogen atom or an alkyl group represented by $C_nH_{2n+1}$, n is an integer of 1 to 15, and m is an integer of 2 to 10).

$$[\text{-O-CHR}^1\text{-C}_m\text{H}_{2m+1}\text{-CO-}] \ldots \qquad (2)$$

An example of a polymer B containing repeating units of formula (1) and formula (2) is poly(3-hydroxybutyrate-co-4-hydroxybutyrate) (for example, formula (P3HB4HB)).

From the viewpoint of increasing the melting point, it is preferable that the repeating unit of the polymer B contains at least 3-hydroxybutyrate among 3-hydroxyalkanoate represented by formula (1).

The polymer B preferably contains 50 mol% or more of a repeating unit of 3-hydroxybutyrate with respect to the total repeating unit (100 mol%) of hydroxyalkanoate, and more preferably 70 mol% or more.

Polymer B may have two or more repeating units of ester, and may be, for example, a di-polymer having two repeating units as described above, a tri-copolymer having three repeating units, and a tetra-copolymer having four repeating units.

For example, an example of a tri-copolymer may be described as poly(3-hydroxybutyrate-co-3-hydroxyvalerate-co-3-hydroxyhexanoate) (hereinafter referred to as (P3HB3HV3HH)).

As described above, the polymer B preferably contains 3-hydroxybutyrate in the repeating unit of the 3-hydroxyalkanoate represented by formula (1). The ratio XX of the repeating unit of 3-hydroxybutyrate to 100 mol of the ester repeating unit of the total hydroxyalkanoate is preferably 90 mol% or more, more preferably 95 mol% or more, and still more preferably 98.0 mol% or more.

The ratio XX is usually 100 mol% or less, preferably 99.9 mol% or less, and preferably 99.8 mol% or less.

The arrangement of the copolymers may be any of random copolymers, alternating copolymers, block copolymers, graft copolymers and the like.

Polymer B may have ester repeating units other than those of formula (1) and formula (2), but the main chain of said other ester repeating units does not contain an aromatic hydrocarbon structure. That is, the polymer B is an aliphatic polyester. However, it is possible that a group having an aromatic hydrocarbon group is bonded to a carbon atom in the main chain of the other ester repeating unit.

As described in L. Tripathi., M. C. Factories, 1144 (2012), the composition ratio of the repeating unit in the polymer B can be calculated from the results of NMR measurement such as 1H-NMR and 13C - NMR.

Further, the polymer B may be a blend of two or more kinds of poly(3-hydroxyalkanoate) polymers.

The weight average molecular weight (Mw) of the polymer B can be from 10,000 to 1,000,000, is preferably from 20000 to 800000, and more preferably from 30000 to 600000. When the weight-average molecular weight (Mw) is 10,000 or more, a molded body having excellent impact strength and tensile elongation can be obtained. When the weight-average molecular weight is 500000 or less, the dispersibility in the olefin-based polymer A is improved. The weight-average molecular weight may be 400000 or less, 300000 or less, 200000 or less, or 100,000 or less. In this specification, the weight average molecular weight (Mw) is measured by GPC using standard polystyrene as a molecular weight standard substance.

Polymer B is a thermoplastic resin, and is preferably crystalline.

The melt mass flow rate (MFR (B)) of the polymer B measured according to JIS K7210-2014 under the conditions of a temperature of 190 °C or 170 °C and a load of 2.16 kgf is preferably 0.1g / 10 min or more and 200g / 10 min or less. The MFR (B) may be 1g/10 min or more, 3g / 10 min or more, 5g / 10 min or more, 7g / 10 min or more, 8g / 10 min or more, 10g / 10 min or more, or 20g / 10 min or more. The MFR (B) may be 150g/10 min or more, or 100g / 10 min or more.

The melting point (Tm) of the polymer B is 150 °C or higher, and may be 155 °C or higher, 160 °C or higher, 165 °C

or higher, 170 °C or higher, or 175 °C or higher. The melting point (Tm) of the polymer B may be 220 °C or less, 200 °C or less, or 190 °C or less.

The melting point (Tm) of the polymer B is measured by the position of a main peak based on melting of a crystal obtained by differential scanning calorimetry (DSC) measurement in accordance with JIS K7121.

The poly(3-hydroxyalkanoate)-based polymer may be produced by microorganisms or may be derived from a compound derived from a petroleum or plant source, such as a cyclic lactone.

In the poly(3-hydroxyalkanoate)-based polymer, each repeating unit of the hydroxyalkanoate may consist of only the D-form (R-form) as in the case of a polymer produced from a microorganism, or the repeating unit of the hydroxyalkanoate may include both the D-form (R-form) and the L-form (S-form) as in the case of a polymer derived from a mixture of the D-form (R-form) and the L-form (S-form).

In a poly(3-hydroxyalkanoate)-base polymer produced from a microorganism, the repeating unit of formula (1) can be expressed as follows :In the formula (BI-1), n represents a degree of polymerization.

[Chemical formula 1]

··· (B I − 1)

For example, poly(3-hydroxybutyrate) produced from a microorganism has the following structure. In the formula (BI-2), n represents a degree of polymerization.

[Chemical formula 2]

··· (B I − 2)

Poly(3-hydroxybutyrate-co-3-hydroxyhexanoate) produced from microorganisms has the following structure. In the formula (BI-3), m and n represent the degree of polymerization.

[Chemical formula 3]

··· (B I − 3)

Poly(3-hydroxybutyrate-co-4-hydroxybutyrate) produced from microorganisms has the following structure. In formula (BI-4), m and n represent the degree of polymerization.

[Chemical formula 4]

$$\left( -O-\overset{CH_3\ \ H}{C}-CH_2-\overset{O}{\overset{\|}{C}}- \right)_m \left( -O-CH_2-CH_2-CH_2-\underset{\underset{O}{\|}}{C}- \right)_n \quad \cdots \text{(BI-4)}$$

Polymer B can be biodegradable.

For example, a poly(3-hydroxyalkanoate)-based polymer can be produced by microorganisms such as Alcaligenes eutrophus AC32 strain strains in which PHA synthase enzyme gene derived from Aeromonascaviae was introduced into Alcaligenes eutrophus (international deposit under the Budapest Treaty, international depositary authority: National Institute of Advanced Industrial Science and Technology, Center 6, 1-1-1 Higashi, Tsukuba City, Ibaraki Prefecture, Japan), original deposit date: August 12, 1996, transferred on August 7, 1997, accession number FERMBP - 6038 (transferred from original deposit FERM P - 15786)) (J. Bacteriol., 1794821 (1997)).

<Composition of the Composition>

In the composition, the content of the olefin-based polymer A is 90 to 99.9 parts by mass and the content of the polymer B is 0.1 to 10 parts by mass with respect to 100 parts by mass of the total of the olefin-based polymer A and the polymer B.

If the content of the polymer B is too large, the transferability of the unevenness of the mold and the releasability from the unevenness of the mold may be reduced.

From the viewpoint of forming a cocrystal of the polymer A and the polymer B and exhibiting a crystallization retardation effect in the composition, the content of the olefin-based polymer A and the content of the polymer B should be in the above-mentioned range.

The total proportion of the olefin-based polymer A and the polymer B in the total composition can be 50% by mass or more, preferably 60% by mass or more, and more preferably 70% by mass or more.

In the composition, the polymer B may or may not form a dispersed phase. The polymer B forming a dispersed phase means that the composition has a sea-island structure in which the olefin-based polymer A is a continuous phase (sea part) and the polymer B is a dispersed phase (island part). The average equivalent circle diameter of the dispersion phase (island portion) can be 10 nm to 400 $\mu$m.

(Additives)

The composition may optionally contain additives. The additive can be at least one selected from the group consisting of a stabilizer, antibacterial agent, anti-fungal agent, dispersing agent, plasticizer, flame retardant, tackifier, coloring agent, metal powder, organic powder, inorganic fiber, organic fiber, organic and inorganic composite fiber, inorganic whisker, and filler.

Examples of the stabilizer are at least one selected from the group consisting of a lubricant, an anti-aging agent, a heat stabilizer, a light stabilizer, a weathering agent, a metal deactivator, an ultraviolet absorber, a light stabilizer, and a copper inhibitor. An example of the light stabilizer is a hindered amine photosensitizing agent.

An example of the coloring agent is at least one selected from the group consisting of titanium oxide, carbon black and organic pigment. An example of metal powder is ferrite.

An example of an organic powder is protein. Examples of inorganic fibers are glass fibers and metal fibers. Examples of organic fibers are carbon fibers and aramid fibers. An example of inorganic whiskers is potassium titanate whiskers.

Examples of fillers are at least one selected from the group consisting of glass beads, glass balloons, glass flakes, asbestos, mica, calcium carbonate, talc, silica, calcium silicate, hydrotalcite, kaolin, diatomaceous earth, graphite, pumice stone, ebo flour, cotton flock, cork powder, barium sulfate, fluororesin, cellulose powder, and wood powder.

The composition may contain only one or a combination of two or more of the above-mentioned additives.

In the composition, the additive may be contained in either the olefin-based polymer A or the polymer B. The additive may form a dispersed phase different from the polymer B in the continuous phase of the olefin-based polymer A.

The loss modulus E" of the composition with respect to temperature determined by the dynamic mechanical analysis (DMA) method may have a plurality of peaks (for example, two peaks) in the curve, but preferably one peak (a single peak).

In the DMA method, a measurement sample having a thickness of 0.3 mm and cut into strips is heated stepwise at a heating rate of 2 °C / min from a measurement temperature of -150 °C in a measurement mode of tension at a measurement frequency of 5 Hz until the sample is melted and cannot be measured. The strain was less than 0.1%.

When there is only one peak in the curve, the temperature of the peak corresponds to the glass transition temperature Tg. The glass transition temperature Tg of the composition can be - 70 °C to 150 °C.

The composition can have co-crystals of the olefinic-based polymer A and the polymer B. The presence or absence of a cocrystal can be confirmed by the presence or absence of a peak different from the peaks of the constituent single crystals in the X-ray diffraction result. For example, when polypropylene is mixed with poly(3-hydroxybutyrate-co-3-hydroxyhexanoate) (P3HB3HH), the single crystal peak of polypropylene appears at $2\theta$ = about 14°, about 17°, and about 18.5°, the peak of P3HB3HH appears at $2\theta$ = about 13.5° and about 17°, and the cocrystal peak appears at about 16°. The peak position of the single crystal of polypropylene can be seen in J. Polymer Sci. B Polymer Physics Vol. 24, 461-491 (1986).

The eutectic ratio (the volume ratio of the co-crystal structure to the total structure) in the composition can be 0.1% or more. The eutectic ratio can be calculated as the total area of the peak relating to the cocrystal with respect to the total area of the peaks relating to the single crystal of the olefin-based polymer A and the peak relating to the cocrystal.

For example, a mixture of polypropylene and P3HB3HH can be calculated as follows. First, the two dimensional X-ray diffraction pattern of the composition is evaluated, and the obtained two dimensional X-ray diffraction pattern is circumferentially averaged with respect to all azimuth angles to convert into a diffraction angle-intensity profile. Then, the eutectic ratio can be calculated from the ratio of the area of the peak of $2\theta$ = 16° to the total area of the peaks derived from the single crystal of polypropylene and the peak of $2\theta$ = 16°.

If the composition has co-crystals, the rate of crystallization of the composition is delayed. A composition having a slow crystallization rate is useful for transferring a fine structure pattern and the like.

(Method for Producing Composition)

The above-mentioned composition can be obtained by melt-kneading an olefin-based polymer A, a polymer B, and an additive to be added if necessary. The kneading temperature (set temperature of the kneading machine) is preferably 150 to 300 °C, more preferably 170 to 280 °C. It is also possible to melt and knead a portion of each of the olefin-based polymer A and the polymer B to obtain a pre-kneaded product, and then add the remainder of the olefin-based polymer A and the polymer B to the pre-kneaded product and further melt and knead to obtain a composition.

(Method for Producing Molded Article of Composition)

A molded body of the above-mentioned composition having a desired shape can be obtained by using a known resin molding method such as an injection molding method, an extrusion molding method, a vacuum molding method, a compression molding method, a press molding method, a foam molding method, a blow molding method, or a rotation molding method.

The composition may also be bonded to other materials such as other resins, metals, paper, leather and the like to provide a multi-layer structure.

The surface of a molded body of the composition of the present invention may be subjected to a surface treatment. Examples of the surface treatment include embossing treatment, corona discharge treatment, flame treatment, plasma treatment, ozone treatment and the like.

The above-mentioned composition can be widely used as a resin material.

Examples of applications of the composition of the present invention include exterior members, furniture and interior decorative members, house members, toy members, gardening members, automobile members, and packaging materials. Examples of exterior members include a carport member, a fence member, a gate door member, a gate pillar member, a post member, a cycle port member, a deck member, a sunroom member, a roof member, a terrace member, a handrail member, a shade member, an awning member, and the like; examples of furniture and interior decorative members include a sofa member, a table member, a chair member, a bed member, a chest member, a cabinet member, a dresser member, and the like; examples of household electrical appliance members include a member for a watch, a member for a portable telephone, a member for a white goods, and the like; examples of toy members include a member for a plastic model, a member for a diorama, a member for a video game main body, and the like; examples of gardening members include a member for a planter, a member for a vase, a member for a flowerpot, and the like; examples of automobile members include a member for a bumper, a member for an instrument panel, a member for an airbag cover, and the like; and examples of packaging materials include a packaging material for food, a packaging material for fiber, and

a packaging material for miscellaneous goods. Other applications include, for example, monitor members, office automation (OA) equipment members, medical members, drainage pans, toiletry members, bottles, containers, snow remover members, and various building members.

## Examples

Hereinafter, the present invention will be described with reference to Examples and Comparative Examples. The olefin-based polymer (A) and thermoplastic ester polymer (B) used in Examples and Comparative Examples are shown below.

(1) Olefin-based Polymer A

(A-1) Propylene Homopolymer
MFR (230 °C, 2.16 kg load): 7g / 10 min.
Melting point (Tm): 163 °C
(A-2) Ethylene Homopolymer (High Density Polyethylene)
(trade name) KEIYO Polyethylene G2500: made by Keiyo Polyethylene Co.
MFR (190 °C, 2.16 kg load): 5.4g / 10 min.
Melting point (Tm): 131 °C

(2) Polymer B

(B-1) Poly(3-hydroxybutyrate-co-3-hydroxyhexanoate) Structural Formula: (BI-3)
Content (mol%) of the comonomer (3HH) component: 1.1 mol% Weight-average molecular weight (Mw): 79000
MFR (190 °C, 2.16 kg load): 38g / 10 min.
Melting point (Tm): 175 °C
(B-2) Poly(3-hydroxybutyrate-co-3-hydroxyhexanoate) Structural Formula: (BI-3)
Content (mol%) of the comonomer (3HH) component: 0.2 mol%
Weight-average molecular weight (Mw): 104000
MFR (190 °C, 2.16 kg load): 7.8g / 10 min.
Melting point (Tm): 175 °C
(B-3) Poly(3-hydroxybutyrate-co-4-hydroxybutyrate)
Structural Formula: (BI-4)
(Trade name) M4300: Made by CJ Cheil Jedang
Content (mol%) of the comonomer (3HH) component: 45 mol%
Weight-average molecular weight (Mw): 216000
MFR (190 °C, 2.16 kg load): 4.0g / 10 min.
Melting point (Tm): 48.7 °C
(B-4) Polyethylene Terephthalate
(Trade name) Bellpet EFG70: Manufactured by BellPolyester Products, Inc.
Intrinsic Viscosity: 0.75dl/g
Melting point (Tm): 255 °C
(B-5) Poly(3-hydroxybutyrate-co-3-hydroxyhexanoate)
Structural Formula: (BI-3)
Content (mol%) of the comonomer (3HH) component: 20 mol%
MFR (170 °C, 2.16 kg load): 38g / 10 min.
Melting point (Tm): 74 °C
(B-6) Poly(3-hydroxybutyrate-co-3-hydroxyhexanoate)
Structural Formula: (BI-3)
Content (mol%) of the comonomer (3HH) component: 12 mol%
Weight-average molecular weight (Mw): 850000
MFR (190 °C, 2.16 kg load): 3.5g / 10 min.
Melting point (Tm): 129 °C
(B-7) Poly(3-hydroxybutyrate-co-3-hydroxyhexanoate)
Structural Formula: (BI-3)
Content (mol%) of the comonomer (3HH) component: 8.5 mol%
Weight-average molecular weight (Mw): 850000
MFR (190 °C, 2.16 kg load): 3.7g / 10 min.

Melting point (Tm): 148 °C

The physical properties of each polymer and composition were measured according to the following method.

(1) Melt mass flow rate (MFR, unit: g / 10 min)

It was measured according to the method specified in JIS K7210-2014. The measurement temperature was 230 °C. or 190 °C. and the load was 2.16 kg.

(2) Weight-average molecular weight (Mw)

The weight average molecular weight (Mw) was calculated based on the measurement result of gel permeation chromatography (GPC). In the measurement of GPC, a GPC-150C manufactured by Waters Corporation was used as a measuring device, ortho-dichlorobenzene solutions having a polymer concentration of 0.05% by weight were used, a mixed polystyrene gel column (PSKgelGMH6-HT manufactured by Tosoh Corporation) was used as a column, and the measurement temperature was 135 °C.

(3) Melting point (Tm) of polymer

It was measured according to the method specified in JIS K7121. The measurement temperature was -50 °C to 200 °C or -50 °C to 250 °C, and the temperature increasing rate was 10 °C / min.

(4) the content of the comonomer component of polymer B

The content of the comonomer component is the molar ratio of another repeating unit (3-hydroxyhexanoate (3HH) or 4-hydroxybutyrate (4HB)) other than 3-hydroxybutyrate to the number of total ester repeating units of the hydroxyalkanoate of polymer B.

The content of the comonomer components was determined using the 1H-NMR spectrum described in L. Tripathi., M. C. Factories, 1144 (2012).

[Measurement Conditions]
Make: Bruker AVANCE600
Probe: 10 mm Cryoprobe
Measured temperature: 135 °C
Pulse repetition time: 1 second.
Pulse width: 45°
Total count: 700 times
Magnetic field strength: 600 MHz

(5) Measurement of Tg of Composition

The temperature-storage modulus curve of the composition was obtained by a viscoelastic device (SII Nanotechnology Inc.; DMS200) and the number of peaks was counted.

(6) Fine Structure Pattern Transferability

Using a compression molding machine (P-37) manufactured by Shindo Metal Industry Co., Ltd., the resin was preheated for 5 minutes at a temperature of 200 °C on a textured substrate having a fine structure pattern with a surface roughness (Ra) of 60 μm, and then pressed against the substrate at a temperature of 200 °C under a pressure of 1 MPa for 30 seconds to obtain a molded body which was shaped. The surface roughness of the shaped molded body was evaluated. It is shown that the fine structure pattern transferability is high as the surface roughness approaches 60 μm.

(7) Surface roughness (Ra)

Using a surfcoder SE-30K (manufactured by Kosaka Research Laboratory Co., Ltd.), a three dimensional surface roughness measuring instrument, an area of X direction: 2 mm × Y direction: 0.99 mm was measured at a speed of 0.5 mm / second in the X direction (pitch in the Y direction is 2 μm). The arithmetic mean surface roughness (Ra) was obtained from the measured results.

(8) Mold releasability

Using a compression molding machine (P-37) manufactured by Shindo Metal Industry Co., Ltd., the resin was preheated for 5 minutes at a temperature of 200 °C on a textured substrate having a fine structure pattern with a surface roughness (Ra) of 60 μm, and then pressed against the substrate at a temperature of 200 °C under a pressure of 1 MPa for 30 seconds to obtain a molded body which was shaped. When the shaped molded body was peeled off at an angle of 45° from the textured substrate, if the molded body was broken, it was set to ×, and if it was not broken, it was set to O.

(9) Cocrystal

The two dimensional pattern of X-ray diffraction of the composition was evaluated, and the obtained two dimensional pattern of X-ray diffraction was circumferentially averaged with respect to all azimuth angles to convert into a diffraction angle-intensity profile, and it was confirmed that the composition had a cocrystal by the presence or absence of a peak corresponding to the diffraction based on the cocrystal ($2\theta = 16°$). The eutectic ratio was calculated based on the areas of the peak of the cocrystal and the peaks of the single crystal of polypropylene. A specific calculation method of the eutectic ratio is based on the following formula, in which a two dimensional pattern of X-ray diffraction is subjected to peak fitting and an area value is calculated.

Eutectic ratio = 16° peak area value / (14° peak area value + 17° peak area value + 18.5° peak area value + 16° peak area value)

(10) Crystallization Rate

After quenching the composition from 190 °C to 125 °C, differential scanning calorimetry was performed while maintaining the temperature, and the crystallization rate (half-crystallization time t1/2) was measured.

The properties of polymer A and polymer B are shown in Tables 1 and 2, respectively.

Table 1

| Table 1 | Polymer A | | | |
|---|---|---|---|---|
| No. | Material Type | Tm | MFR | MFR |
| | | | 230°C | 190°C |
| | | °C | g/10min | g/10min |
| A -1 | Homopolypropyene | 163 | 7 | |
| A -2 | High Density Polyethylene | 131 | | 5.4 |

[Table 2]

| Table 2 | Polymer B | | | | |
|---|---|---|---|---|---|
| No. | Material Type | Comonomer | | Type | Tm |
| | | Type | content | | |
| | | | mol% | | °C |
| B-1 | P (3HB3HH) | 3H H | 1.1 | Aliphatic | 175 |
| B-2 | P (3HB3HH) | 3H H | 0.2 | Aliphatic | 175 |
| B-3 | P (3HB4HB) | 4H B | 45 | Aliphatic | 48.7 |
| B-4 | PET | - | - | Aromatic | 255 |
| B-5 | P (3HB3HH) | 3H H | 20 | Aliphatic | 74 |
| B-6 | P (3HB3HH) | 3H H | 12 | Aliphatic | 129 |
| B-7 | P (3HB3HH) | 3H H | 8.5 | Aliphatic | 148 |

(Example 1)

A 95.8 mass% polymer (A-1) and a 4.2 mass% polymer (B-1) were uniformly mixed in a powder state, and then supplied to a small-sized kneading machine (Xplore; manufactured by DSM) and kneaded under the conditions of a resin temperature of 190 °C, a kneading time of 4 minutes and a screw rotation speed of 100 rpm to obtain a resin composition. The fine structure pattern transferability of the resin composition was evaluated.

(Example 2)

The procedure was the same as in Example 1 except that 95% by mass of polymer (A-1) and 5% by mass of polymer (B-2) were used.

(Example 3)

The procedure was the same as that in Example 1 except that 90% by mass of polymer (A-1) and 10% by mass of polymer (B-2) were used.

(Example 4)

The procedure was the same as in Example 1 except that 90% by mass of polymer (A-2) and 10% by mass of polymer (B-1) were used.

(Example 5 - a reference example)

The procedure was the same as in Example 1 except that 65.2 mass% of polymer (A-1) and 34.8 mass% of polymer (B-1) were used.

(Comparative Example 1)

The procedure was the same as in Example 1 except that only 100% by mass of the polymer (A-1) was used.

(Comparative Example 2)

The procedure was the same as in Example 1 except that 47.8 mass% of polymer (A-1) and 52.2 mass% of polymer (B-1) were used.

(Comparative Example 3)

The procedure was the same as that in Example 1 except that 90% by mass of polymer (A-1) and 10% by mass of polymer (B-3) were used.

(Comparative Example 4)

The procedure was the same as in Example 1 except that 95% by mass of polymer (A-1) and 5% by mass of polymer (B-5) were used.

(Comparative Example 5)

The procedure was the same as in Example 1 except that 95% by mass of polymer (A-1) and 5% by mass of polymer (B-6) were used.

(Comparative Example 6)

The procedure was the same as in Example 1 except that 95% by mass of polymer (A-1) and 5% by mass of polymer (B-4) were used.

The results are shown in Table 3.

Table 3

| Table 3 | Composition | | | | | | | | Evaluation Results | | |
|---|---|---|---|---|---|---|---|---|---|---|---|
| | Polymer A | | Polymer B | | | Tg peak | Cocrystal | Eutectic ratio | Transferability | Releasability | Crystallization rate t1/2 |
| | Type | Content mass% | Type | Tm °C | Content mass% | | | % | μm | | Secs |
| Example 1 | A-1 (PP) | 95.8 | B-1 (P3HB3HH) | 175 | 4.2 | Single peak | Formed | 15.0 | 51.7 | ○ | 211 |
| Example 2 | A-1 (PP) | 95.0 | B-2 (P3HB3HH) | 175 | 5.0 | Single peak | Formed | 29.9 | 45.1 | ○ | 217 |
| Example 3 | A-1 (PP) | 90.0 | B-2 (P3HB3HH) | 175 | 10.0 | Single peak | Formed | 21.4 | 50.6 | ○ | 190 |
| Example 4 | A-2 (HDPE) | 90.0 | B-1 (P3HB3HH) | 175 | 10.0 | Single peak | Not formed | 0 | 48.9 | ○ | 100 |
| Example 5 | A-1 (PP) | 65.2 | B-1 (P3HB3HH) | 175 | 34.8 | Double peak | Not formed | 0 | 36.4 | ○ | 142 |
| Comp. Ex-ample 1 | A-1 (PP) | 100.0 | - | - | - | Single peak | Not formed | 0 | 19.8 | ○ | 136 |
| Comp. Ex-ample 2 | A-1 (PP) | 47.8 | B-1 (P3HB3HH) | 175 | 52.2 | Double peak | Not formed | 0 | - | X | 94 |
| Comp. Ex-ample 3 | A-1 (PP) | 90.0 | B-3 (P3HB4HB) | 48.7 | 100 | Double peak | Not formed | 0 | 27.4 | ○ | 82 |
| Comp. Ex-ample 4 | A-1 (PP) | 95.0 | B-5 (P3HB3HH) | 129 | 5.0 | Double peak | Not formed | 0 | 19.8 | ○ | 132 |
| Comp. Ex-ample 5 | A-1 (PP) | 95.0 | B-6 (P3HB3HH) | 148 | 5.0 | Double peak | Not formed | 0 | 18.9 | ○ | 142 |
| Comp. Ex-ample 6 | A-1 (PP) | 95.0 | B-4 (PET) | 255 | 5.0 | Double peak | Not formed | 0 | 15.6 | ○ | 105 |

It has been confirmed that by mixing an appropriate amount of a poly(3-hydroxyalkanoate)-based polymer having a high melting point into an olefin-based polymer, the transferability is enhanced even when a thermoplastic polyester is added. In Examples 1 to 3, the retardation of crystallization rate was also confirmed.

## Claims

**1.** A composition comprising:

an olefin-based polymer A, and
a polymer B,
wherein the polymer B is a poly (3-hydroxyalkanoate)-based polymer having a melting point of 150 °C or higher, and
a content of the polymer A is 90 to 99.9 parts by mass and a content of the polymer B is 0.1 to 10 parts by mass with respect to a total of 100 parts by mass of the polymer A and the polymer B.

**2.** The composition according to claim 1, wherein the polymer A is a propylene-based polymer.

## Patentansprüche

**1.** Eine Zusammensetzung, umfassend:

ein Polymer A auf Olefinbasis und
ein Polymer B,
wobei das Polymer B ein Polymer auf Poly(3-hydroxyalkanoat)-Basis mit einem Schmelzpunkt von 150 °C oder mehr ist, und
ein Gehalt an Polymer A 90 bis 99,9 Massenteile und ein Gehalt an Polymer B 0,1 bis 10 Massenteile, bezogen auf insgesamt 100 Massenteile von Polymer A und Polymer B, beträgt.

**2.** Die Zusammensetzung gemäß Anspruch 1, wobei das Polymer A ein Polymer auf Propylenbasis ist.

## Revendications

**1.** Composition comprenant:

un polymère A à base d'oléfine, et
un polymère B,
dans laquelle le polymère B est un polymère à base de poly(3-hydroxyalcanoate) ayant un point de fusion de 150°C ou plus, et
une teneur du polymère A est de 90 à 99,9 parties en masse et une teneur du polymère B est de 0,1 à 10 parties en masse par rapport à un total de 100 parties en masse du polymère A et du polymère B.

**2.** Composition selon la revendication 1, dans laquelle le polymère A est un polymère à base de propylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0673264 A
- JP 2008239858 A
- JP 2006077063 A
- WO 2009133516 A1

### Non-patent literature cited in the description

- **L. TRIPATHI.** *M. C. Factories*, 2012, 1144
- *J. Bacteriol.*, 1997, 1794821
- *J. Polymer Sci. B Polymer Physics*, 1986, vol. 24, 461-491